Europäisches Patentamt

European Patent Office

Office européen des brevets

(11) Veröffentlichungsnummer : **0 008 757**
**B1**

(12) **EUROPÄISCHE PATENTSCHRIFT**

(45) Veröffentlichungstag der Patentschrift :
**24.11.82**

(51) Int. Cl.³ : **F 16 K 11/02**, F 16 K 19/00,
F 24 D 19/10

(21) Anmeldenummer : **79103141.2**

(22) Anmeldetag : **27.08.79**

(54) **Mischbatterie für Brauchwasseranlagen mit niedriger Vorlauftemperatur und zusätzlicher Heisswasserbereitung.**

(30) Priorität : **08.09.78 DE 2839152**

(43) Veröffentlichungstag der Anmeldung :
**19.03.80 (Patentblatt 80/06)**

(45) Bekanntmachung des Hinweises auf die Patenterteilung : **24.11.82 Patentblatt 82/47**

(84) Benannte Vertragsstaaten :
**DE FR GB IT SE**

(56) Entgegenhaltungen :
**DE A 2 516 302**
**DE A 2 827 236**
**DE U 1 987 461**

(73) Patentinhaber : **Raetz, Karlheinz, Dr.**
**Gassnerstrasse 12**
**D-3300 Braunschweig (DE)**

(72) Erfinder : **Raetz, Karlheinz, Dr.**
**Gassnerstrasse 12**
**D-3300 Braunschweig (DE)**

(74) Vertreter : **Gramm, Werner, Dipl.-Ing. et al**
**Patentanwälte Gramm + Lins Theo-**
**dor-Heuss-Strasse 2**
**D-3300 Braunschweig (DE)**

Mischbatterie für Brauchwasseranlagen mit niedriger Vorlauftemperatur und zusätzlicher Heißwasserbereitung

Die Erfindung betrifft eine Mischbatterie für Brauchwasseranlagen mit niedriger Vorlauftemperatur und zusätzlicher Heißwasserbereitung, bei der in einem Batteriegehäuse ein Kaltwasserzulauf, ein Warmwasserzulauf und ein Heißwasserzulauf jeweils steuerbar zu einer Mischkammer geführt sind.

Angesichts der Verknappung fossiler Brennstoffe werden zunehmend die Wärmeerzeuger Sonne, Wärmepumpe und Fernheizung für die Heiz- und Brauchwassererwärmung eingesetzt.

Heizenergie aus der Sonne soll aus technischen, die aus der Wärmepumpe aus thermodynamischen Gründen bei einer möglichst niedrigen Temperatur, z.B. bei 40 °C erzeugt werden.

Auch bei der Fernheizung wird eine Absenkung der Rücklauftemperatur von heute 70 °C auf unter 40 °C vorbereitet, um den bei der sog. Wärme-Kraft-Kopplung auftretenden Verlust im thermischen Wirkungsgrad des Kraftwerkes als Folge der hohen Rücklauftemperatur zu beseitigen.

Bei der Brauchwasserversorgung ist dieser Temperaturbereich für alle Anwendungen mit hohem Wasser- und Energieverbrauch, z.B. Waschen, Baden und Duschen ausreichend. Lediglich zum Geschirrspülen und zum Nacherwärmen abgekühlten Badewassers sind höhere Wassertemperaturen erforderlich. Aus diesem Grund sind heute den Niedertemperaturwarmwasserspeichern Erhitzer nachgeschaltet, die das Brauchwasser von ca. 40 °C auf ca. 70 °C erwärmen. Die Nacherwärmung kann sinnvoll nur elektrisch erfolgen, da es gerade der Zweck solcher Anlagen ist, evtl. vorhandene fossile Zusatzheizungen bei ausreichend hohen Außentemperaturen nicht zu betreiben.

Die elektrische Nacherwärmung bereits ausreichend temperierten Brauchwassers und die nachfolgende Abkühlung auf die Nutztemperatur durch Mischen mit kaltem Wasser verletzt aber den thermodynamischen Grundsatz, Wärme bei der Temperatur zu erzeugen, bei der sie genutzt wird.

Durch offenkundige Vorbenutzungen sind Brauchwasseranlagen bekannt, bei der einer Mischbatterie kaltes, warmes und heißes Wasser zugeleitet wird. Das kalte Wasser wird dem Kaltwassernetz, das Warmwasser einem dem Heizkessel zugeordneten, thermostatisch gesteuerten Boiler, dessen Brauchwassertemperatur zur Vermeidung von Kalkausscheidungen auf einen Wert kleiner 60 °C begrenzt ist, und das Heißwasser einem unter der Spüle angeordneten Elektroboiler, der mit Warmwasser gespeist wird, entnommen. Die Mischbatterie weist drei Drehknöpfe zur Betätigung der Ventile, die den drei Leitungen zugeordnet sind, auf, so daß Kaltwasser, Warmwasser und Heißwasser jeweils alleine gezapft oder beliebig gemischt werden können.

Derartige Mischbatterien weisen den Nachteil auf, daß an drei Hähnen manipuliert werden muß.

Dies ist für den Benutzer, zumal für den nicht ständigen Benutzer einer derartigen Mischbatterie, umständlich, da er jedesmal verstandesmäßig erfassen muß, welcher Hahn welcher Wasserleitung zugeordnet ist. Darüber hinaus wird der Benutzer häufig zur Herstellung von warmen Wasser den Kaltwasserhahn und Heißwasserhahn bedienen, weil auf diese Weise das größtmögliche Temperaturmischintervallerzielt wird. Eine derartige Mischung von Kaltwasser und Heißwasser ist aber thermodynamisch ungünstig und erfordert einen hohen Energieverbrauch.

Der Erfindung liegt demgegenüber die Aufgabe zugrunde, eine Mischbatterie der eingangs erwähnten Art zu erstellen, die einfacher zu bedienen ist und eine thermodynamisch günstige Mischung erzwingt.

Diese Aufgabe wird erfindungsgemäß dadurch gelöst, daß gleichzeitig nur der Kaltwasserzulauf und der Warmwasserzulauf bzw. der Warmwasserzulauf und der Heißwasserzulauf mit der Mischkammer in Verbindung bringbar sind. Es ist daher nur möglich, das heiße Wasser mit dem warmen bzw. das warme Wasser mit dem kalten Wasser zu mischen. Die Mischung erfolgt dabei in der Weise, daß ohne Temperatursprung das Temperaturintervall von Kalt- zu Heißwasser eingestellt werden kann. Vorzugsweise sind die Temperaturregelung und die Durchflußmengenregelung funktionell getrennt, so daß bei eingestellter Temperatur die Mischbatterie beim Öffnen immer gleichtemperiertes Wasser liefert. Hierdurch entfällt die bei Zweihahn- oder gar Dreihahnmischbatterien notwendige langwierige Temperatureinstellung, bei der zusätzlich Energie und Wasser verbraucht werden. Zur Einsparung von Energie und Wasser ist es zweckmäßig, wenn die Durchflußmenge über eine Drehspindel mit niedriger Ganghöhe geregelt wird. Die Temperatur wird zweckmäßig über einen Hebel geregelt, damit eine sichtbare Einstellung möglich ist. Die erfindungsgemäße Mischbatterie läßt sich vorteilhaft auch als Einhebelmischbatterie ausbilden.

Eine vorteilhafte Ausführungsart der Erfindung ist gekennzeichnet durch eine Mischbatterie mit einer Keramikscheibensteuerung im Batteriegehäuse mit einer ortsfesten Keramikscheibe mit drei in einem Teilbereich mit etwa gleichen Winkelabständen voneinander angeordneten, den Zuläufen zugeordneten Bohrungen und mit einer gegen die ortsfeste Scheibe von außen verdrehbaren, axial abdichtenden zweiten Keramikscheibe mit zwei oder drei zur Mischkammer führenden Steueröffnungen in einem immer nur je zwei benachbarte Bohrungen der ortsfesten Scheibe überdeckenden Abstand.

Durch Verdrehen der zweiten Keramikscheibe wird neben dem Öffnen und Verschließen der einzelnen Zuläufe erreicht, daß in bestimmten, eine Mischtemperatur festlegenden Stellungen dieser Scheibe immer nur zwei benachbarte Zulaufbohrungen gemeinsam übersteuert werden, die Wasser zweier unmittelbar aufeinanderfolgender Temperaturstufen führen. In der Regel handelt es sich um einen Kaltwasserzulauf, einen Warmwasserzulauf mit einer Temperatur von ca. 40 °C aus einem Niedertemperatursystem und einem Heißwasserzulauf mit einer Temperatur von ca. 70 °C aus einem elektrischen Erhitzer.

Bei einer konstruktiv einfachen erfindungsgemäßen Mischbatterie der vorher beschriebenen Art sind zentrisch durch beide Keramikscheiben von der Mischkammer zum Auslauf führende Bohrungen vorgesehen. Zulaufendes Wasser tritt außen über die auf einem gemeinsamen Teilkreis liegenden Bohrungen gesteuert in die Mischkammer ein und tritt gegenläufig durch die zentrischen Bohrungen aus der Mischkammer aus.

Anhand eines abgebildeten Funktionsschemas und eines Ausführungsbeispiels der Mischbatterie wird die Erfindung im folgenden näher erläutert. Es zeigen:

Figur 1 Funktionsschema einer Brauchwasseranlage mit niedriger Vorlauftemperatur

Figur 2 Längsschnitt durch eine Mischbatterie mit einer Keramikscheibensteuerung

Figur 3 Schnitt nach der Linie I-I in Figur 2

Figur 4 Aufsicht der Steuerscheibe

Figur 5 Hauptsteuerungsstellungen der beiden Keramikscheiben

Figur 6 Aufsicht auf eine Zweiloch- Steuerscheibe in Warmstellung.

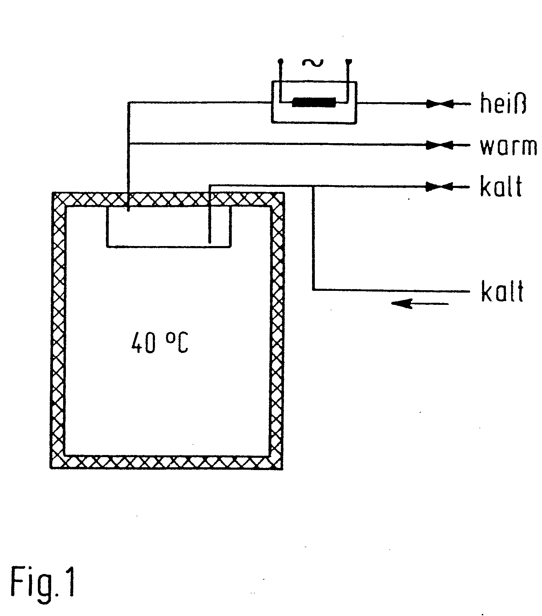

Die Brauchwasseranlage nach Figur 1 unterscheidet sich von herkömmlichen dadurch, daß parallel zu der heute üblichen Warmwasserleitung mit zwischengeschaltetem Durchlauferhitzer eine zweite Warmwasserleitung direkt zur Mischbatterie geführt wird, aus der niedrigtemperiertes Warmwasser ohne elektrische Nacherwärmung entnommen werden kann.

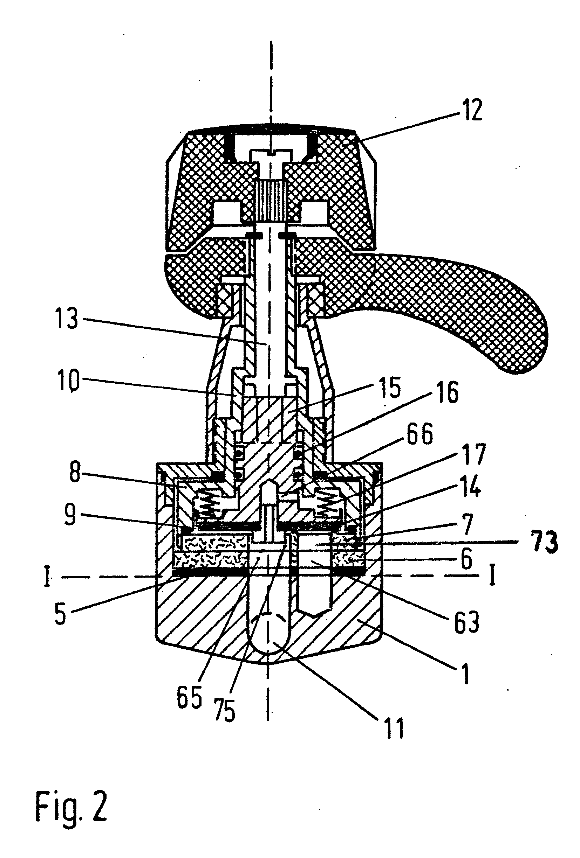

Die hierzu erfoderliche Mischbatterie nach Figur 2 hat am Batteriegehäuse 1 drei Eintrittsstutzen, den Heißwasserzulauf 2, den Warmwasserzulauf 3 und den Kaltwasserzulauf 4. Die entsprechenden Zulaufbohrungen führen von unten zur Mischkammer 9, in der eine Keramikscheibe 6 fest eingesetzt ist und die Zulaufbohrungen mittels einer Dichtscheibe 5 gegeneinander abgedichtet sind. In einem Teilbereich dieser Scheibe 6 sind mit bestimmten Winkelabständen voneinander auf einem gemeinsamen Teilkreis die Bohrungen 62, 63 und 64 vorgesehen, die an die Zulaufbohrungen 2, 3 und 4 anschließen.

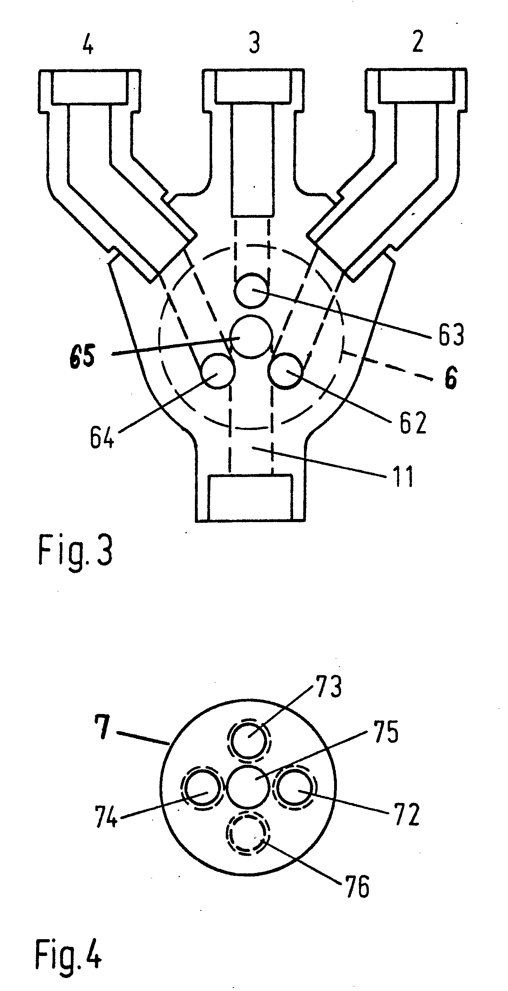

Gegen die ortsfeste Keramikscheibe 6 abdichtend ist in die Kammer 9 von oben die zweite, in Figur 4 dargestellte Keramikscheibe 7, von außen über die Stange 10 drehbar eingesetzt. Diese Scheibe 7 wird dabei abgedichtet von einer Büchse 8 aufgenommen. Zur Steuerung der Zuläufe besitzt diese Keramikscheibe 7 drei Steueröffnungen 72, 73 und 74, die beim Drehen der Scheibe 7 die Bohrungen 62, 63 und 64 übersteuern. Die Lage dieser Öffnungen 72, 73 und 74 ist dabei so gewählt, daß immer nur zwei Bohrungen der darunterliegenden ortsfesten Scheibe 6 ganz oder teilweise überdeckt werden können.

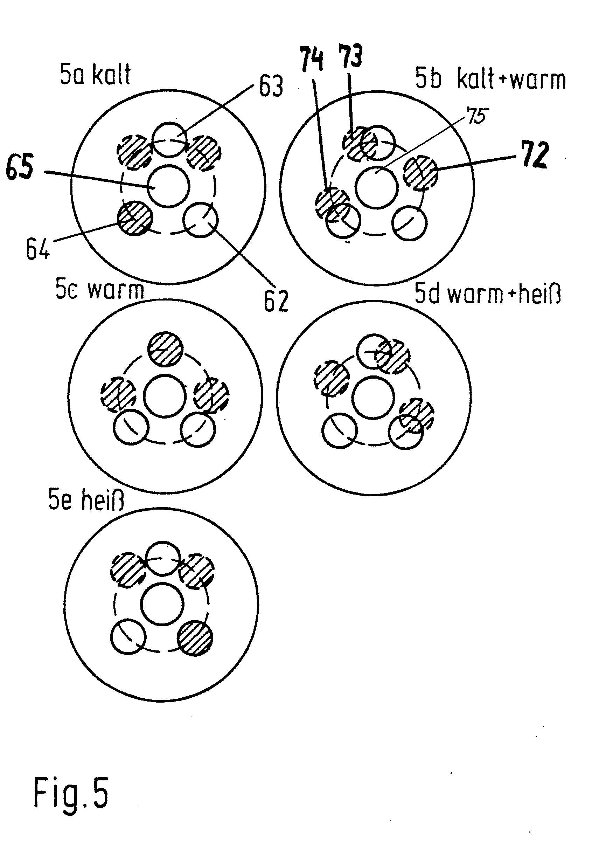

In den Figuren 5a-5e sind die wichtigsten Steuerungsstellungen zwischen den beiden Scheiben 6 und 7 gezeigt. In der Stellung nach Figur 5a strömt über die Bohrung 64 und die Steueröffnung 74 nur Kaltwasser zur Mischkammer 9. In der Stellung nach Figur 5b wird eine Mischung von Kalt- und Warmwasser erreicht. In Stellung 5c strömt Warmwasser aus. In Stellung 5d erfolgt eine Mischung von Warm- und Heißwasser. In Stellung 5e tritt aus der Batterie Heißwasser aus.

Von der Mischkammer 9 strömt das eingetretene Wasser über die zentrischen Bohrungen 65 und 75 gegenläufig zur Auslaufbohrung 11.

Die Durchflußmenge wird mit dem Drehknopf 12 über die Spindel 13 reguliert. Die Dichtscheibe 14 aus einem elastischen Material ist in der Büchse 8 mittels eines Sechskants 15 geführt eingesetzt, so daß die Steuerscheibe 7 relativ zur Dichtscheibe 14 nicht gedreht werden kann. Diese Maßnahme ist erforderlich, damit beim Drehen der Stange 10 und geschlossener Mischbatterie die Dichtscheibe 14 nicht beschädigt wird.

Die Haft- und Gleitreibung zwischen der Spindel 13 und der Stange 10 muß kleiner sein als die zwischen der Stange 10 und den ortsfesten Teilen des Batteriegehäuses, damit bei einer Drehung des Knopfes 12 die Stange 10 nicht mitgedreht wird.

Der Sechskant 15 mit dem innenliegenden Gewinde liegt daher oberhalb der O-Ringdichtung 16 und ist vor Verkalkung geschützt.

Reibungserhöhend ist auch der beim Schließen asymmetrisch auf die Dichtscheibe 14 wirkende Wasserdruck. Drei oder mehrere Druckfedern 17 können das so erzeugte Drehmoment teilweise ausgleichen.

Damit bei einer Undichtigkeit in der Mischkammer das eintretende Wasser nicht über die Spindel nach außen drückt, enthält die Dichtscheibe 14 eine aus der Mischkammer 9 zur Ausflußöffnung 11 führende Bohrung 66.

Die Steuerscheibe nach Figur 4 enthält drei Bohrungen 72, 73 und 74 mit erhabenen, ringförmigen Dichtkanten. Eine blinde Dichtkante 76 ist vorgesehen, damit die Dichtscheibe 14 immer eben auf den Dichtkanten aufliegt.

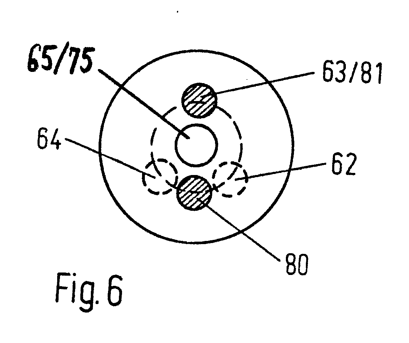

Eine einfache Ausführung der Steuerscheibe nach Figur 6 enthält zwei Bohrungen 80, 81, von denen eine Bohrung 81 sich im Bereich der Bohrung 63 der ortsfesten Scheibe bewegt und eine Bohrung 80 der Steuerscheibe die Bohrungen 62 und 64 der ortsfesten Scheibe übersteuert. Auch hier sind zwei blinde Dichtkanten, um 90° gegenüber den Bohrungen 80 und 81 versetzt, vorgesehen, damit die Dichtscheibe 14 eben aufliegt.

## Ansprüche

1. Mischbatterie für Brauchwasseranlagen mit niedriger Vorlauftemperatur und zusätzlicher Heißwasserbereitung, bei der in einem Batteriegehäuse (1) ein Kaltwasserzulauf (4), ein Warmwasserzulauf (3) und ein Heißwasserzulauf (2)
jeweils steuerbar zu einer Mischkammer (9) geführt sind, dadurch gekennzeichnet, daß gleichzeitig nur der Kaltwasserzulauf (4) und der Warmwasserzulauf (3) bzw. der Warmwasserzulauf (3)
und der Heißwasserzulauf (2) mit der Mischkammer (9) in Verbindung bringbar sind.

2. Mischbatterie nach Anspruch 1, gekennzeichnet durch eine Keramikscheibensteuerung
im Batteriegehäuse (1) mit einer ortsfesten Keramikscheibe (6) mit drei in einem Teilbereich mit
etwa gleichen Winkelabständen voneinander angeordneten, den Zuläufen (2, 3, 4) zugeordneten
Bohrungen (62, 63, 64) und mit einer gegen die
ortsfeste Scheibe (6) von außen verdrehbaren,
axial abdichtenden zweiten Keramikscheibe (7)
mit zwei oder drei zur Mischkammer (9)
führenden Steueröffnungen (80, 81; 72, 73, 74) in
einem immer nur je zwei benachbarte Bohrungen
(62, 63 bzw. 63, 64) der ortsfesten Scheibe
überdeckenden Abstand.

3. Mischbatterie nach Anspruch 2, dadurch gekennzeichnet, daß zur Einstellung der Durchflußmenge eine Dichtscheibe (14) mit der zweiten
Keramikscheibe (7) zusammenwirkt, wobei
Druckfedern (17) zwischen die Dichtscheibe (14)
und eine im Batteriegehäuse (1) drehbar gelagerte und mit der zweiten Keramikscheibe (7)
verbundenen Büchse (8) eingesetzt sind.

4. Mischbatterie nach Anspruch 2, gekennzeichnet durch zentrisch durch beide Keramikscheiben (6, 7) von der Mischkammer (9) zum
Auslauf (11) führende Bohrungen (65, 75).

### Claims

1. Mixing tap system for water supply with a
low supply temperature and additional hot water
preparation, in which a cold water inlet (4), a
warm water inlet (3) and a hot water inlet (2) are
respectively controllably connected with a mixing
chamber (9) in a tap system housing (1), characterised in that only the cold water inlet (4) and the
warm water inlet (3) or only the warm water inlet
(3) and the hot water inlet (2) are simultaneously
connectable with the mixing chamber (9).

2. Mixing tap system according to claim 1,
characterised by a ceramic disc control in the tap
system housing (1) with a stationary ceramic disc
(6) with three holes (62, 63, 64) arranged at
approximately equal angular distances in a part
of the disc and associated with inlets (2, 3, 4), and
with an axially sealing second ceramic disc (7)
which is turnable from the outside in relation to
the stationary disc (6) with two or three control
apertures (80, 81; 72, 73, 74) leading to the mixing
chamber (9) at a distance to cover always only
two at a time of the adjacent holes (62, 63 or 63, 64) of the stationary disc.

3. Mixing tap system according to claim 2,
characterised in that a sealing disc (14) cooperates with the second ceramic disc (7) to adjust the
flow rate, whereby pressure springs (17) are
arranged between the sealing disc (14) and a
bush (8) rotatably mounted in the tap system
housing (1) and connected with the second
ceramic disc (7).

4. Mixing tap system according to claim 2,
characterised by holes (65, 75) leading centrally
through both ceramic discs (6, 7) from the mixing
chamber (9) to the outlet (11).

### Revendications

1. Robinet-mélangeur pour installations d'eau
de consommation à faible température d'entrée
et production additionnelle d'eau chaude dans
lequel, dans un corps de mélangeur (1) une
alimentation en eau froide (4), une alimentation
en eau tiède (3) et une alimentation en eau
chaude (2) sont toutes trois amenées de façon
réglable à une chambre de mélange (9), caractérisé en ce qu'on ne peut mettre simultanément en
communication avec la chambre de mélange (9)
que l'alimentation en eau froide (4) et l'alimentation en eau tiède (3), ou respectivement l'alimentation en eau tiède (3) et l'alimentation en eau
chaude (2).

2. Robinet-mélangeur selon la revendication 1,
caractérisé en ce qu'il comprend dans le corps de
mélangeur (1) une commande à disques en céramique comportant un disque en céramique stationnaire (6) avec trois perçages (62, 63 et 64)
disposés dans une zone partielle, associés aux
arrivées (2, 3, 4) et ayant les uns avec les autres
des écartements angulaires sensiblement égaux,
et un deuxième disque en céramique (7) qui peut
être fait tourner de l'extérieur par rapport au
disque stationnaire (6), assure l'étanchéité dans
le sens axial et comporte deux ou trois ouvertures
de commande (80, 81 ; 72, 73, 74) menant à la
chambre de mélange (9) et ayant un écartement
tel qu'elles ne peuvent toujours recouvrir que
deux perçages voisins (62, 63, respectivement 63,
64) du disque stationnaire.

3. Robinet-mélangeur selon la revendication 2,
caractérisé en ce qu'en vue du réglage du débit,
un disque d'étanchéité (14) coopère avec le
deuxième disque en céramique (7), des ressorts
de compression (17) étant interposés entre le
disque d'étanchéité (14) et un boîtier (8) pouvant
tourner dans le corps du mélangeur (1) et attaché
au deuxième disque en céramique (7).

4. Robinet-mélangeur selon la revendication 2,
caractérisé par des perçages centraux (65, 75) qui
traversent les deux disques de céramique (6, 7) et
conduisent de la chambre de mélange (9) à la
sortie (11).

heiß

warm

kalt

kalt

40 °C

Fig.1

Fig. 2

Fig. 3

Fig. 4

5a kalt

74 73

5b kalt+warm

63

75

65

72

64

62

5c warm

5d warm+heiß

5e heiß

Fig. 5

Fig. 6